# EUROPEAN PATENT APPLICATION

(11) **EP 4 706 364 A1**
(43) Date of publication of application: **11.03.2026**
(21) Application number: 25199855.5
(22) Date of filing: 03.09.2025
(51) Int. Cl.: A01B 76/00, G05G 1/015, G05G 1/08, G05G 1/10

(54) **INPUT DEVICE WITH UPPER AND LOWER WHEEL FOR CONTROLLING AN AGRICULTURAL MACHINE**

(30) Priority: 09.09.2024 GB 202413230
(71) Applicant: AGCO International GmbH, 8212 Neuhausen am Rheinfall (CH)
(72) Inventor: BARZEN, Alexander, 76275 Ettlingen (DE); WEIGAND, Jan, 87616 Marktoberdorf (DE)
(74) Representative: AGCO Intellectual Property Department

(57) **Abstract**

An input device (201) for controlling an agricultural machine (101) has a lower wheel (216) and an upper wheel (220) coupled with a common actuator (210) for providing a force feedback to the lower wheel (216) and the upper wheel (220). According to a method for controlling the force feedback, a manual contact of the lower wheel (216) or the upper wheel (220) can be detected, and the actuator (210) can be controlled to provide a first force feedback if the lower wheel (216) is manually contacted and a second force feedback if the upper wheel (220) is manually contacted.

## Description

### FIELD

The present disclosure relates generally to an input device for controlling an agricultural machine.

### BACKGROUND

European patent EP 3 321 763 B1, titled "A switching device for an agricultural vehicle", filed on October 25, 2017, discloses an input device with an upper wheel and a lower wheel. The lower wheel may be used to set a desired height, extension, or depth of a component of the agricultural vehicle such as a front or rear hitch. The upper wheel may be used to control a variable of a further vehicle component.

U. S. patent application US 2013/0289832 A1, titled "Agricultural tractor control system and method", published on October 31, 2013, discloses an agricultural vehicle with a front hitch and a rear hitch for the attachment of respective implements. Both hitches may be designed as a three-point linkage system actuated by hydraulic cylinders. The height of respective linkages of each hitch is sensed by respective sensors which each measure the position of pistons in the associated cylinders.

### BRIEF SUMMARY

When an operator operates an input device to control a tool or an implement of an agricultural machine, he may monitor the tool or the implement visually, for example by looking through a window of the agricultural machine or by checking parameters of the tool or implement displayed on a screen. The visual monitoring task may get complicated when the operator controls two implements simultaneously, especially if the implements are attached at opposite ends of the agricultural machine. Thus, it would be beneficial to provide a human machine interface (HMI) configured to facilitate the monitoring of the implements.

According to an aspect of the invention there is provided an input device for controlling an agricultural machine comprising a lower wheel and an upper wheel. The lower wheel and the upper wheel are coupled with a common actuator for providing a force feedback to the lower wheel and the upper wheel.

The input device may be a manual human machine interface to be used by an operator for controlling a device or a machine of any type, e. g. a construction machine or an agricultural machine such as a tractor, a harvester, a combine, a sprayer or any other type of vehicle or vehicle-implement combination. For example, a vehicle-implement combination may comprise a first implement adjustable by a first parameter (e. g. distance over ground) and a second parameter (e. g. tilt angle). Alternatively, the vehicle-implement combination may comprise a first implement adjustable by a first parameter (e. g. distance over ground) and a second implement adjustable by a second parameter (e. g. distance over ground). In both cases, the first parameter may be controllable by one wheel and the second parameter may be controllable by the other wheel. The input device may be integrated in the machine so that it can be operated when an operator controls the machine. The input device may be grabbed by a hand and the lower and the upper wheel may be operated by the fingers. The actuator may be a single actuator configured to provide a force feedback to the lower wheel as well as to the upper wheel. The actuator may be of any type such as an electric motor, a piezo drive, an electromagnet, a controllable mechanical spring, a magnet-rheological actuator, etc. Depending on the type of the actuator, the actuator may be coupled with the lower and upper wheel by a corresponding connection. For example, the actuator may be mechanically coupled with the lower and upper wheel for transferring the force feedback from the actuator to the lower and/or upper wheel. The force feedback may be a haptic feedback such as a ripple, a vibration and/or a counter torque (resistance) acting on the lower and/or upper wheel. The force feedback provided to the lower wheel may depend on a first parameter of the implement and the force feedback provided to the upper wheel may depend on a second parameter of the same implement or another implement coupled to the machine. For example, the first parameter may represent a distance of the implement from the ground and the second parameter may represent a tilt angle of the same implement or a distance of another implement from the ground. The parameter may alternatively represent a desired operational range of a component, e. g. an upper permissible height for the implement. Depending on a variation of the first or second parameter (e. g. increase or decrease), the force feedback may vary accordingly (e. g. stronger/faster or weaker/slower vibrations). The operator may feel the force feedback when operating the first and/or the second wheel of the input device with his hand. Based on the strength of the force feedback, the operator may haptically monitor the implement(s) and feel a variation of the first or second parameter.

The lower wheel and the upper wheel may be rotatable about a common axis.

The common axis may be a vertical axis. Each of the lower wheel and the upper wheel may be rotatable in two different directions, for example clockwise or counterclockwise. Due to the common axis, the lower wheel and the upper wheel may be arranged concentrically and provide compact dimensions of the input device.

The lower wheel, the upper wheel and the actuator may be coupled with each other by a common shaft.

When the actuator provides a force feedback, the force feedback may be transferred to the lower and the upper wheel via the common shaft. For example, the common shaft may transfer a force or torque induced by the actuator to the lower and the upper wheel. The induced force or torque may cause the lower and the upper wheel to vibrate. Hence, the force feedback of both wheels can be controlled by the same actuator.

The lower wheel and/or the upper wheel may be uncoupleable from the common shaft.

Depending on which of the lower and upper wheel is uncoupled from the common shaft, the transfer of the force feedback provided by the actuator can be interrupted for the lower wheel, the upper wheel or both wheels. The force feedback may be interrupted by an appropriate device such as a controllable clutch integrated in the wheels. Hence, the lower wheel can be uncoupled for providing a force feedback to the upper wheel only or the upper wheel can be uncoupled for providing a force feedback to the lower wheel only. The input device may comprise an automatic switch for (un-)coupling the lower and/or the upper wheel to/from the common axis.

A rotational movement of the lower wheel and a rotational movement of the upper wheel may be detectable by a common sensor.

The usage of a common sensor for both wheels instead of multiple sensors may reduce the complexity of the input device. The common sensor may be an encoder. The common sensor may detect a movement parameter of the common shaft to which the lower and the upper wheel may be connected. The movement parameter may represent an operator's input such as an angle or a rotational speed by which the lower or the upper wheel has been moved by the operator. According to the movement parameter of the lower wheel or the upper wheel, a parameter of the implement(s) may be controlled. Moreover, the movement parameter may represent a parameter of the force feedback such as a frequency of a vibration.

The input device may comprise a control unit configured to control the actuator to provide a first force feedback to the lower wheel, and a second force feedback different to the first force feedback to the upper wheel.

The control unit may be integrated in the input device or anywhere else in the machine. The control unit may be connected with the common actuator to send a control signal to the actuator. Additionally, the control unit may be connected with the common sensor to receive the sensor signals and to generate the control signal based thereon. The first force feedback may be provided by the actuator when the lower wheel is operated. The second force feedback may be provided by the actuator when the upper wheel is operated. Hence, depending on whether the lower or the upper wheel is operated, a different haptic feedback can be provided so that the operator can feel which one of the wheels he is operating.

The control unit may be configured to control the actuator to provide selectively the first or the second force feedback.

For example, the control unit may switch between first and second feedback in response to specific conditions, e. g. a detection of a contact of the upper or the lower wheel, a function assigned to the lower or the upper wheel, or any other condition. The control unit may also control a (un-)coupling of the lower or upper wheel to/from the common axis to provide the force feedback to the lower wheel or to the upper wheel.

The first force feedback and the second force feedback may depend on a torque provided by the actuator.

As mentioned above, the torque may provide a vibration as force feedback. But also other types of force feedback may be provided by a torque as for example a counter torque against a movement of the lower or upper wheel that may be perceived by the operator as a resistance to move the corresponding wheel. The torque may be adjusted by the control unit to provide an increasing or decreasing strength of the force feedback, for example in dependence of a movement parameter of the corresponding wheel or in dependence of a parameter of an implement controlled by the corresponding wheel. The torque may be adjusted by the control unit according to a specific pattern to provide a force feedback with a ripple. Also a combination may be possible as for example a strength adjustable force feedback with ripple.

The control unit may be configured to control the actuator to provide the first force feedback if the lower wheel is manually contacted, and provide the second force feedback if the upper wheel is manually contacted.

The lower or upper wheel may be manually contacted if the operator touches with his finger the corresponding wheel. The first or the second force feedback may be provided to the corresponding wheel at the moment when the corresponding wheel has been contacted so that the operator can feel the first or the second force feedback before he moves the lower or the upper wheel. Hence, the operator may haptically distinguish whether he is contacting the lower or upper wheel depending on the first or the second force feedback. If he feels that he touches the wrong wheel, he can move his fingers to the other wheel before having operated the wrong wheel and executing an unintended operation of the implement.

The control unit may be configured to control the actuator to provide the first force feedback if both the lower wheel and the upper wheel are manually contacted, and provide the second force feedback if the upper wheel only is manually contacted.

The first force feedback may be assigned to the lower wheel and the second force feedback may be assigned to the upper wheel to provide a different force feedback in dependence of the corresponding contacted wheel. But the operator may grab the input device from the top to operate the lower wheel so that his finger(s) may simultaneously be in touch with the upper wheel. For this case, the first force feedback may be provided by the actuator to be in accordance with the intention of the operator to operate the lower wheel.

The lower wheel may comprise a sensor for detecting a manual contact, and the upper wheel may comprise another sensor for detecting a manual contact.

Both, the sensor for detecting a manual contact of the upper wheel and the sensor for detecting a manual contact of the lower wheel may be of the same type such as a contact sensor, a capacitive sensor, an inductive sensor, etc. Alternatively, the lower wheel and the upper wheel comprise sensors of different type. The sensors may be integrated in the wheels. Both sensors may be connected with the control unit. Based on the sensor signals, the control unit may distinguish which wheel is contacted by the operator and control the common actuator to provide the corresponding force feedback.

The input device may comprise a catching mechanism for providing a relative movement between the shaft and the lower or the upper wheel within a predefined angular range.

In each of the wheels, a separate catching mechanism may be integrated. Each catching mechanism may define a neutral position of the corresponding wheel. When one the two wheels is moved out of the neutral position, the catching mechanism of the corresponding wheel enables a relative movement between the wheel and the common shaft until the catching mechanism blocks the relative movement. The relative movement may be blocked by the catching mechanism when the predefined angular range has been exceeded by the relative movement. Then, the catching mechanism establishes a mechanical contact between the wheel and the common shaft so that a further movement of the wheel causes a synchronous movement of the common shaft. Then, the other wheel may also be caused to move synchronously with the common shaft since both the lower and the upper wheel may be connected with the common shaft. When the wheel is rotated back to the neutral position, the mechanical contact may be reversed so that the catching mechanism enables the relative movement between the wheel and the common shaft again. The predefined angular range may be XXXXXXXXXXXX. This range would be sufficient to detect whether the lower wheel or the upper wheel is operated by the operator when his finger(s) is/are in contact with both the lower and the upper wheel. For example, the operator may rotate the lower wheel while his hand also contacts the upper wheel. Then, the lower wheel may move relative to the common shaft whereas the upper wheel may stay static until the catching mechanism of the lower wheel establishes the mechanical contact between the lower wheel and the common shaft. Hence, based on the relative movement of one of the two wheels, it can be determined which wheel is intended to be moved by the operator if both wheels are touched by his hand. Accordingly, the first force feedback can be provided to the lower wheel and the second force feedback can be provided to the upper wheel.

The catching mechanism may comprise a sensor for determining the relative movement between the shaft and the lower or the upper wheel.

Both, the sensor of the catching mechanism of the lower wheel and the sensor of the catching mechanism of the upper wheel are connected with the control unit. So, the control unit may receive a signal when one of the two wheels is moved relatively to the common shaft. Based on the sensor signals, the control unit may distinguish which of the two wheels is operated by the operator if his hand contacts both wheels simultaneously. The sensor may be of the type of an angle sensor, a speed sensor or a force sensor (e. g. strain gauge) for example. Then, the control unit may control the common actuator to provide the force feedback assigned to the wheel which has been moved.

The catching mechanism may comprise a biasing element for urging the lower or the upper wheel into a neutral position.

The biasing element may be a spring for example. The biasing element may be tensioned when the wheel is moved relatively to the common shaft. When the wheel is released by the operator, the tensioned biasing element may expand and move the wheel back into the neutral position. Both, the catching mechanism of the lower wheel and the catching mechanism of the upper wheel may each comprise a separate biasing element.

A further aspect provides an agricultural machine with an input device as described above, a front hitch and a rear hitch. The control unit may be configured to control the front hitch in response to a rotational movement of one of the lower and upper wheels, and to control the rear hitch in response to a rotational movement of the other one of the lower and upper wheels.

The front hitch and the rear hitch may be equipped with actuators to adjust a parameter of the front hitch and/or the rear hitch. Optionally, a first implement may be attached to the front hitch and/or a second implement may be attached to the rear hitch. Based on the received signals from the input device, the control unit may control the actuators of the front hitch or the first implement attached thereto or the rear hitch or the second implement attached thereto. For example, the control unit may adjust a parameter of the front hitch or the first implement when the lower wheel has been operated and a parameter of the rear hitch or the second implement when the upper wheel has been operated.

Both the front hitch and the rear hitch may be adjustable in height, and the force feedback of one of the lower and upper wheels may depend on the height of the front hitch, and the force feedback of the other one of the lower and upper wheels may depend on the height of the rear hitch.

Depending on the height of the front hitch, a distance to ground of the first implement can be adjusted and depending on the height of the rear hitch, a distance to ground of the second implement can be adjusted. I. e., the distance to ground of an implement may correspond to the height of the hitch to which the implement is attached. Accordingly, the force feedback provided to the lower wheel may depend on the distance to ground of the first implement and the force feedback provided to the upper wheel may depend on the distance to ground of the second implement. For example, the strength of the force feedback may be increased by the control unit when the distance to ground of an implement decreases so that a short distance to ground of the implement can be haptically indicated to the operator to avoid an unintentional collision of the implement with the ground.

Another aspect includes a method of controlling a force feedback for an input device having an actuator coupled to a lower wheel and an upper wheel. The method may comprise detecting a manual contact of the lower wheel or the upper wheel, and controlling the actuator to provide a first force feedback if the lower wheel may be manually contacted, and a second force feedback if the upper wheel may be manually contacted.

As disclosed above, the control unit is configured to execute different actions. Each action may be implemented as one or more method steps of the method executable by the control unit. Hence, each action for which the control unit is configured to execute may be defined as a method step.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 illustrates an agricultural machine with implements connected to a front hitch and a rear hitch from a top view.
FIG. 2 illustrates an input device for controlling the agricultural machine.
FIG. 3 illustrates a catching mechanism integrated in the input device.
FIG. 4 illustrates a flow chart of a method.

### DETAILED DESCRIPTION

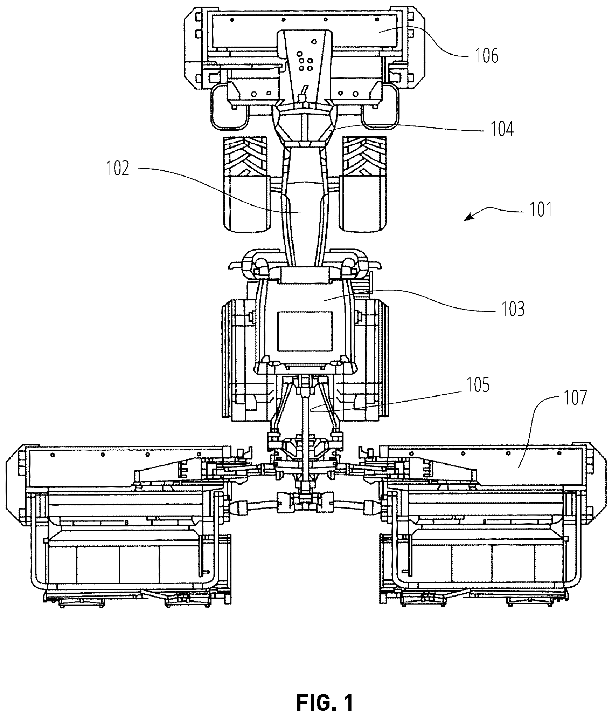

FIG. 1 shows an agricultural machine 101 from a top view. The agricultural machine 101 may be a vehicle or a vehicle-implement combination. The vehicle may be an agricultural vehicle such as a tractor, a harvester, a combine, a sprayer or of any other type such as a truck. The vehicle may generate a tractive force to tow (or push) an implement through an agricultural field. The implement may be used for an operation in the agricultural field and may be of the type of a plough, a rake, a planter, a sprayer, a mower, a trailer, etc. Depending on the type of the implement, the implement may comprise one or more tools such as a rake rotor, a mower knife, a seeding unit, a spray nozzle, a shovel, a dumper, etc. As exemplarily shown in FIG. 1, the agricultural machine 101 comprises a vehicle 102 in terms of a tractor with a cabin 103, a front hitch 104 and a rear hitch 105. The rear hitch 105 is provided at the rear of the vehicle 102, and the front hitch 104 is provided at the front of the vehicle 102. One or two implements may be detachably connected with the front hitch 104 and/or the rear hitch 105 of the agricultural machine 101. As exemplarily shown in FIG. 1, a first implement 106 in terms of a mower is attached to the front hitch 104 and a second implement 107 also in terms of a mower is attached to the rear hitch 105.

The front hitch 104 may be a hitch as disclosed in EP 1 609 345 A1, entitled "Tractor Front Hitch", published on December 28, 2005, and can be actuated (raised or lowered) using associated hydraulic cylinders as actuators. The rear hitch 105 may be a three-point hitch as disclosed in EP 3 398 417 A1, entitled "An Agricultural Tractor", published on November 7, 2018, and can be actuated (raised or lowered) using associated hydraulic cylinders as actuators. When the height of the front and/or rear hitch 104, 105 is adjusted by the corresponding hydraulic cylinders, a distance between the agricultural field (or ground) and the implements 106, 107 attached to the corresponding front and/or rear hitch 104, 105 can be adjusted.

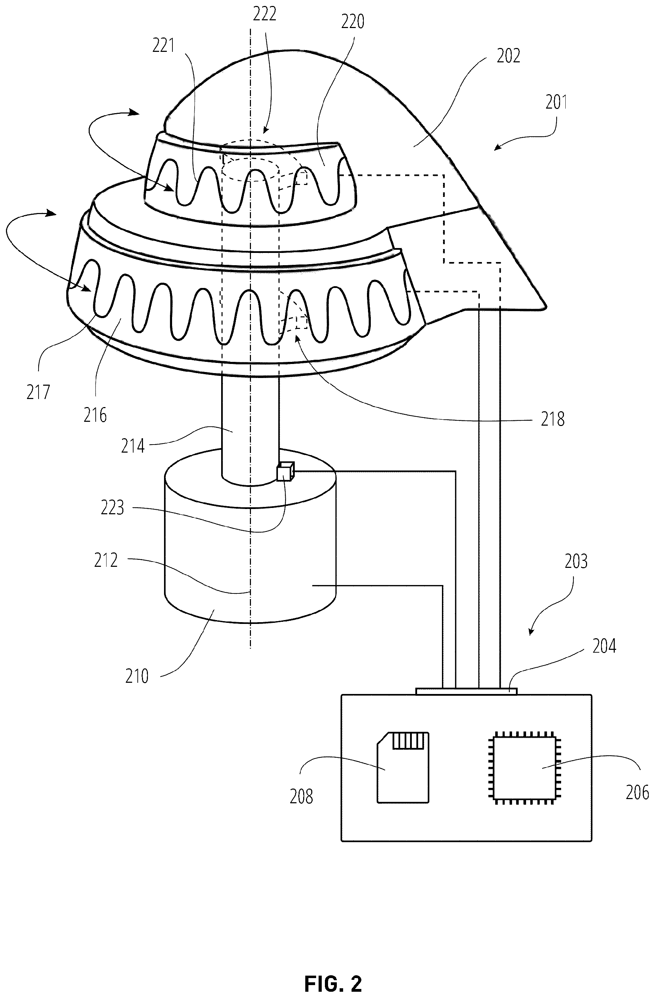

Within the cabin 103 of the agricultural machine 101, an input device 201 as exemplarily shown in FIG. 2 is provided. The input device 201 may be part of an armrest located in the cabin 103. The armrest may also comprise a display device to display parameters of the agricultural machine 101, e. g. parameters of the hitches 104, 105 and/or the implements 106, 107. An operator may enter the agricultural machine 101 and sit in the cabin 103 to manually control the input device 201. The input device 201 comprises a housing 202 having a dome-like shape intended for the resting of an operator's hand. The input device 201 further comprises a lower wheel 216, an upper wheel 220, a common shaft 214, a common actuator 210 and a control unit 203.

As shown in FIG. 2, the control unit 203 comprises an I/O interface 204, a controller 206 and a memory 208. The I/O interface 204, the controller 206 and the memory 208 may be attached to a printed circuit board (PCB). The control unit 203 may receive and send signals or data via the I/O interface 204. The I/O interface 204 may be a wireless interface or a connector. The controller 206 may store the data or signals received by the control unit 203 in the memory 208. The memory 208 may contain additional data or executable computer program products, for example in terms of a computer-implemented method, that may be retrieved, processed or executed by the controller 206. Data or signals resulting from the processing of data or signals or from the execution of a computer program product may be stored to the memory 208 or sent to the I/O interface 204 by the controller 206.

As can also be seen in FIG. 2, the upper wheel 220 is arranged above the lower wheel 216. The lower wheel 216 and the upper wheel 220 can be manually rotated about a vertical axis 212 of the input device 201, e. g. in a clockwise or counterclockwise direction. The upper wheel 220 has a reduced diameter compared to the lower wheel 216, and is arranged parallel to and concentric with the lower wheel 216. Both, the lower wheel 216 and the upper wheel 220 are arranged partly in the housing 202. An uncovered part of the lower wheel 216 and an uncovered part of the upper wheel 220 extend out of the housing 202 so that the lower wheel 216 and the upper wheel 220 can be contacted and moved by one or more fingers of an operator's hand when grabbing the housing 202 of the input device 201. Hence, the lower wheel 216 and the upper wheel 220 can be easily and comfortably adjusted by the operator.

The lower wheel 216 and the upper wheel 220 are connected to the common shaft 214. When the lower or upper wheel 216, 220 is rotated, the common shaft 214 is rotated accordingly. An encoder 223 of the input device 201 is arranged close to the common shaft 214 to detect a parameter of a rotational movement of the common shaft 214, such as an angle, a movement direction and/or a rotational speed, caused by a rotational movement of the lower wheel 216 or upper wheel 220. Hence, the encoder 223 works as a common sensor and is configured to detect a rotational movement of the lower wheel 216 and a rotational movement of the upper wheel 220. The encoder 223 generates a corresponding signal and sends the signal to the control unit 203 connected with the encoder 223. The signal is received by the control unit 203 via the I/O interface 204 and the controller 206 determines the angle and/or the rotational speed of the common shaft 214.

The lower wheel 216 is equipped with a sensor 217 for detecting a manual contact of the lower wheel 216. The upper wheel 220 is equipped with a sensor 221 for detecting a manual contact of the upper wheel 220. The sensors 217, 220 are connected with the control unit 203 and may be of the type of a contact sensor, a capacitive sensor or an inductive sensor, for example. When the operator touches the lower wheel 216 for rotating the same, sensor 217 sends a corresponding signal to the control unit 203. Analogously, sensor 221 sends a signal to the control unit 203 when the operator touches the upper wheel 220. When the operator touches both the lower and the upper wheel 216, 220, the control unit 203 receives a signal from the sensor 217 and sensor 221.

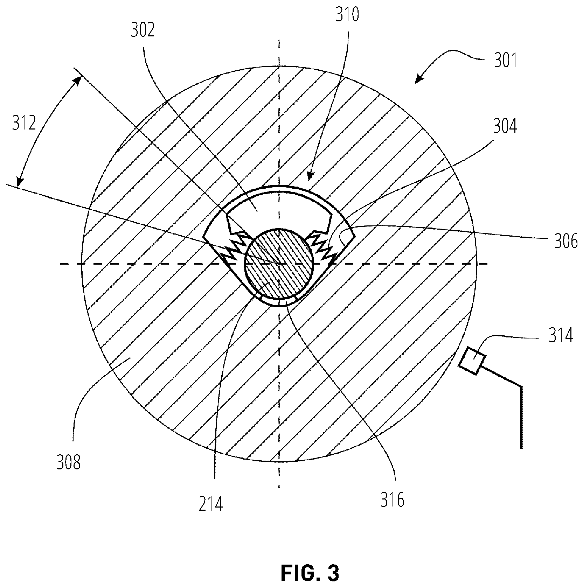

Optionally, the lower wheel 216 may comprise a catching mechanism 218 and/or the upper wheel 220 may comprise a catching mechanism 222. Both, the catching mechanism 218 and the catching mechanism 222 may be of the type of a catching mechanism 301 as exemplarily illustrated in FIG. 3. The catching mechanism 301 is integrated between a wheel 308 and the common shaft 214. The wheel 308 represents the lower wheel 216 in case of the catching mechanism 218 or the upper wheel 220 in case of the catching mechanism 222. The catching mechanism 301 comprises a recess 310 integrated in the wheel 308 and a protrusion 302 attached to the common shaft 214. When the wheel 308 is rotated, the protrusion 302 moves freely within the recess 310 until the protrusion 302 gets in contact with a contact surface 306 of the recess 310. Hence, the catching mechanism 301 enables a relative movement of the wheel 308 in respect of the common shaft 214 within a predefined angular range 312 when the wheel 308 is moved out of a neutral position as shown in FIG. 3 in a first movement direction (e. g. clockwise movement) or in a second movement direction (e. g. counterclockwise movement). The predefined angular range 312 may be XXXXXXXX. When the wheel 308 is rotated in a movement direction until the protrusion 302 gets in contact with the contact surface 306, the catching mechanism 301 blocks the relative movement between the wheel 308 and the common shaft 214 when the wheel 308 is rotated further in the same movement direction. Then, the catching mechanism 301 establishes a mechanical contact between the wheel 308 and the common shaft 214 so that the further movement of the wheel 308 urges the common shaft 214 to move synchronously with the wheel 308.

When the wheel 308 is rotated back to the neutral position as shown in FIG. 3, the mechanical contact between the protrusion 302 and the contact surface 306 may be reversed so that the catching mechanism 301 enables the relative movement between the wheel 308 and the common shaft 214 again. The catching mechanism 301 may also comprise a biasing element 304 arranged between the recess 310 of the wheel 308 and the protrusion 302 urging the wheel 308 into the neutral position. For example, the biasing element 304 may be a mechanical spring that is tensioned when the wheel 308 is rotated relatively to the common shaft 214. When the operator removes his finger from the wheel 308, the biasing element 304 expands and moves the wheel 308 back into the neutral position.

The catching mechanism 301 also comprises an angle sensor 314 and/or a sensor 316 to detect a parameter of a movement of the wheel 308 such as a rotation angle or a rotational speed of the wheel 308. I. e., the angle sensor 314 and the sensor 316 are configured to determine a relative movement between the shaft 214 and the wheel 308. The sensor 316 can be a strain gauge, a capacitive sensor an inductive sensor or any other type of sensor for example. The angle sensor 314 and/or the sensor 316 are connected with the control unit 203 for receiving the sensor signals.

The common actuator 210 is mechanically coupled to the common shaft 214 and communicatively with the control unit 203. Hence, the control unit 203 can generate and send a control signal to the common actuator 210 to provide a force feedback. For example, the common actuator 210 is an electric motor but also other types of actuators are possible for providing the force feedback, such as a piezo drive, an electromagnet, a controllable mechanical spring, a magnet-rheological actuator, etc. In response to the control signal sent by the control unit 203, the common actuator 210 generates the force feedback. In case of an electric motor as common actuator 210 as exemplarily shown in FIG. 2, the common actuator 210 may generate a torque to provide the force feedback. The torque may be adjusted by the control unit 203 according to a specific pattern to provide different haptic characteristics such as a ripple, a vibration and/or a counter torque acting as a resistance against a movement direction of a movement of the lower and/or upper wheel 216, 220. The control unit 203 may also adjust the strength of the force feedback, e. g. by increasing or decreasing the torque provided by the common actuator 210. For example, the strength of the force feedback may be increased by the control unit 203 the closer the first or second implement 106 or 107 approaches the ground. Hence, the operator can be haptically warned by the force feedback to avoid a collision of the implement(s) 106, 107, e. g. the mower(s), with the ground. The force feedback is induced by the common actuator 210 in the common shaft 214 and provided via the common shaft 214 to the lower wheel 216 and the upper wheel 220. Hence, the operator can feel the force feedback as a haptic feedback when he is in touch with the lower and/or upper wheel 216, 220.

The operator may operate the lower wheel 216 to adjust the front hitch 104 or the first implement 106, or the operator may operate the upper wheel 220 to adjust the rear hitch 105 or the second implement. Alternatively, the operator may operate the lower or the upper wheel 216, 220 to adjust a first or a second parameter of the same hitch or the same implement. In the following, the first alternative is described in more detail. Based on the received signals from the encoder 223 and the sensors 217 and 221, the control unit 203 determines whether the operator has moved the lower wheel 216 or the upper wheel 220 to distinguish between an operation of the lower wheel 216 and an operation of the upper wheel 220. In case of an operation of the lower wheel 216, the control unit 203 controls the front hitch 104 or the first implement 106 as well as a first force feedback provided for the lower wheel 216. In case of an operation of the upper wheel 220, the control unit 203 controls the rear hitch 105 or the second implement 107 as well as a second force feedback provided for the upper wheel 220. Alternatively, the control unit 203 may control the front hitch 104 or first implement 106 in response to an operation of the upper wheel 220 and the rear hitch 105 or the second implement 107 in case of an operation of the lower wheel 216. Anyway, the control unit 203 can distinguish between an operation of the lower wheel 216 and the upper wheel 220 of the input device 201 and control the front hitch 104 with the first implement 106 or the rear hitch 105 with the second implement 107 accordingly.

For example, if the control unit 203 receives a signal from the sensor 217 for detecting a manual contact of the lower wheel 216 in combination with a signal from the encoder 223, the control unit 203 determines a movement of the lower wheel 216 and a parameter of the movement such as an angle of rotation. Optionally, the control unit 203 may use the signal of the angle sensor 314 or sensor 316 of the catching mechanism 218 of the lower wheel 216 in addition to or instead of the signal of the sensor 217 for detecting a manual contact of the lower wheel 216 to determine an operation of the lower wheel 216. In response to the operation of the lower wheel 216, the control unit 203 controls an adjustable parameter of the front hitch 104 and/or the first implement 106 attached to the front hitch 104 as for example a height or a distance to ground by adjusting corresponding (hydraulic) actuators of the front hitch 104 and/or the first implement 106. The height of the front hitch 104 or the distance to ground of the first implement 106 may correspond with the angle of rotation of the lower wheel 216. Due to the operation of the lower wheel 216, the control unit 203 controls additionally the actuator 210 to provide a first force feedback for the lower wheel 216. The control unit 203 may adjust the first force feedback in accordance with the determined movement parameter of the lower wheel 216 such as an angle and/or movement direction, or in accordance with a parameter of the front hitch 104 such as the height, or in accordance with a parameter of the first implement 106 such as the distance over ground.

Alternatively, if the control unit 203 receives a signal from the sensor 221 for detecting a manual contact of the upper wheel 220 in combination with a signal from the encoder 223, the control unit 203 determines a movement of the upper wheel 220 and a parameter of the movement such as an angle of rotation. Optionally, the control unit 203 may use the signal of the angle sensor 314 or sensor 316 of the catching mechanism 222 of the upper wheel 220 in addition to or instead of the signal of the sensor 221 for detecting a manual contact of the upper wheel 220 to determine an operation of the upper wheel 220. In response to the operation of the upper wheel 220, the control unit 203 controls an adjustable parameter of the rear hitch 105 and/or the second implement 107 attached to the rear hitch 105 as for example a height or a distance to ground by adjusting corresponding (hydraulic) actuators of the rear hitch 105 and/or the second implement 107. The height of the rear hitch 105 or the distance to ground of the second implement 107 may correspond with the angle of rotation of the upper wheel 220. Due to the operation of the upper wheel 220, the control unit 203 controls additionally the actuator 210 to provide a second force feedback for the upper wheel 220. The control unit 203 may adjust the second force feedback in accordance with the determined movement parameter of the upper wheel 220 such as an angle and/or movement direction, or in accordance with a parameter of the rear hitch 105 such as the height, or in accordance with a parameter of the second implement 107 such as the distance over ground.

Hence, the control unit 203 is configured to provide a different force feedback in dependence of an operation of the lower or upper wheel 216, 220. If the control unit 203 detects a simultaneous contact of both wheels 216 and 220, for example based on sensors 217, 221, and optionally sensors 314 or 316 of both catching mechanisms 218 and 222, in combination with a received signal from the encoder 223, an operation of the lower wheel 216 is considered so that the control unit 203 determines a movement of the lower wheel 216 and a parameter of the movement such as an angle of rotation. In response thereof, the control unit 203 controls an adjustable parameter of the front hitch 104 and/or the first implement 106 attached to the front hitch 104 as for example a height or a distance to ground. The height of the front hitch 104 or the distance to ground of the first implement 106 may correspond with the angle of rotation of the lower wheel 216. Additionally, the control unit 203 controls the actuator 210 to provide the first force feedback for the lower wheel 216 as mentioned above.

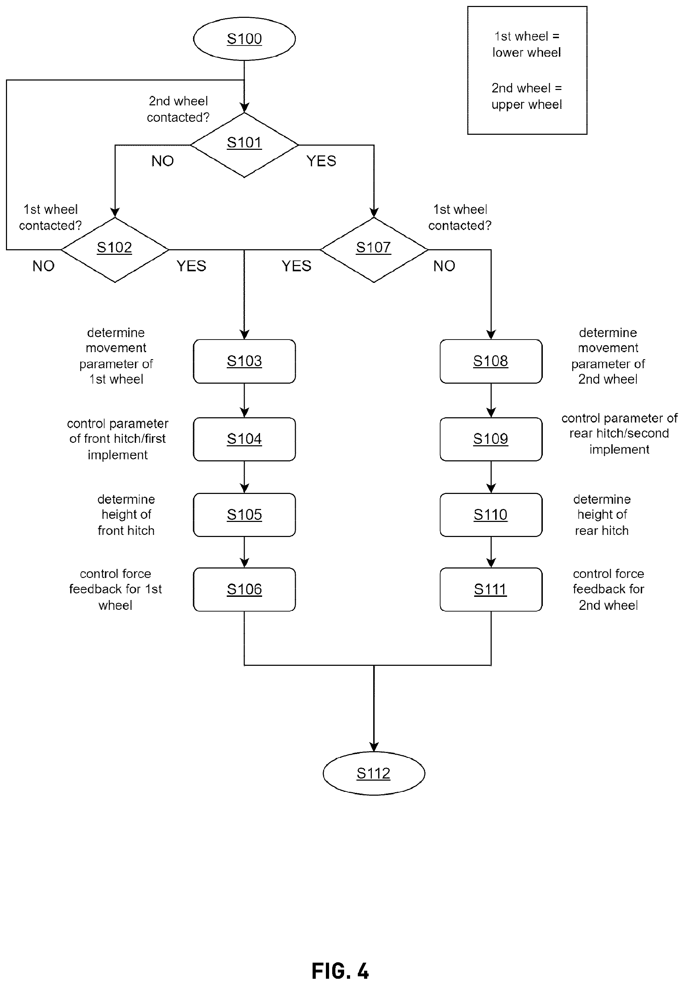

FIG. 4 shows a flow chart of a method for controlling the force feedback for the lower and upper wheel 216, 220 of the input device 201. The method may be at least partly a computer-implemented method stored as a computer program product in the memory 208 of the control unit 203. The control unit 203 is configured to carry out the method. Computer-implemented parts of the method may be executed by the controller 206 of the control unit 203. Non-computer-implemented parts of the method may be executed manually or by other components of the system. The method is described by way of example of several steps without any restriction in respect of the steps. That is, the number or the order of steps may be adapted, for example single steps may be excluded and/or added and executed earlier or later than described.

For the further description of the method, it is assumed that the lower wheel 216 of the input device 201 controls the front hitch 104 or the first implement 106 and the upper wheel 220 controls the rear hitch 105 or the second implement 107. But the method may be applied analogously to an input device 201 with the lower wheel 216 assigned to the rear hitch 105 or second implement 107 and the upper wheel 220 assigned to the front hitch 104 or the first implement 106.

The method starts at step S100, e. g. when the agricultural machine 101 has been started by the operator, and proceeds to step S101.

At step S101, the control unit 203 determines whether the upper wheel 220 has been contacted by the operator, for example if the control unit 203 receives a signal from the sensor 221 for detecting a manual contact of the upper wheel 220 as described above. Optionally, the control unit 203 may receive a signal from the angle sensor 314 and/or the sensor 316 of the catching mechanism 222 of the upper wheel 220 due to a manual operation of the upper wheel 220. In case of a determined contact of the upper wheel 220, the method proceeds with step S107. Otherwise, the method proceeds with step S102.

At step S102, the control unit 203 determines whether the lower wheel 216 has been contacted by the operator, for example if the control unit 203 receives a signal from the sensor 217 for detecting a manual contact of the lower wheel 216 as described above. Optionally, the control unit 203 may receive a signal from the angle sensor 314 and/or the sensor 316 of the catching mechanism 218 of the lower wheel 216 due to a manual operation of the lower wheel 216. In case of a determined contact of the lower wheel 216, the method proceeds with step S103. Otherwise, the method jumps back to step S101.

At step S103, the control unit 203 determines at least one movement parameter of the lower wheel 216 due to a manual operation thereof. For example, the control unit 203 may receive a movement direction, an angle and/or a rotational speed of the movement of the lower wheel 216 from the encoder 223. Then, the method proceeds with step S104.

At step S104, the control unit 203 controls a parameter of the front hitch 104 or first implement 106 in response to the determined movement parameter of the lower wheel 216. The control unit 203 may send a signal to an actuator of the front hitch 104 or the first implement 106 to adjust the front hitch 104 or the first implement 106. For example, the height of the front hitch 104 or the distance to ground of the first implement 106 may be adjusted in accordance with the movement parameter as described above. Then, the method proceeds to step S105.

At step S105, the control unit 203 may optionally determine any parameter of the front hitch 104 or the first implement 106. The parameter may be different to the parameter controlled by the control unit 203 at step S104. The parameter may be sensed by a sensor or calculated by the control unit 203. For example, the control unit 203 may determine a tilt angle of the first implement 106.

The method proceeds to step S106 and the control unit 203 controls the actuator 210 to provide a first force feedback for the lower wheel 216 in response to the manually contacted lower wheel 216 (detected at step S102) or the manually contacted lower and upper wheel 216 and 220 (detected at step S101 in combination with step S107). As explained above, the first force feedback may (e. g. reciprocally or proportionally) correlate with a parameter of the movement of the lower wheel 216 determined at step S103 and/or with a parameter of the front hitch 104 or first implement 106 determined at step S105. For example, the strength of the first force feedback may be increased the closer the first implement 106 approaches the ground. The control unit 203 may also control the actuator 210 to provide a first force feedback with different patterns such as ripples. The first force feedback may be provided by the actuator 210 as a torque to the lower wheel 216 by means of the common shaft 214. Then, the method proceeds to step S112.

At step S107, the control unit 203 determines whether the lower wheel 216 has been contacted by the operator, for example if the control unit 203 receives a signal from the sensor 217 for detecting a manual contact of the lower wheel 216 as described above. Optionally, the control unit 203 may receive a signal from the angle sensor 314 and/or the sensor 316 of the catching mechanism 218 of the lower wheel 216 due to a manual operation of the lower wheel 216. In case of a determined contact of the lower wheel 216, a contact of both wheels 216 and 220 has been detected by the control unit 203 due to the determined contact of the upper wheel 220 at step S101, and the method proceeds with step S103 as described above. Otherwise, a contact of the upper wheel 220 has been detected by the control unit 203 only, and the method proceeds with step S108.

At step S108, the control unit 203 determines at least one movement parameter of the upper wheel 220 due to a manual operation thereof. For example, the control unit 203 may receive a movement direction, an angle and/or a rotational speed of the movement of the upper wheel 220 from the encoder 223. Then, the method proceeds with step S109.

At step S109, the control unit 203 controls a parameter of the rear hitch 105 or second implement 107 in response to the determined movement parameter of the upper wheel 220. The control unit 203 may send a signal to an actuator of the rear hitch 105 or the second implement 107 to adjust the rear hitch 105 or the second implement 107. For example, the height of the rear hitch 105 or the distance to ground of the second implement 107 may be adjusted in accordance with the movement parameter as described above. Then, the method proceeds to step S110.

At step S110, the control unit 203 may optionally determine any parameter of the rear hitch 105 or the second implement 107. The parameter may be different to the parameter controlled by the control unit 203 at step S109. The parameter may be sensed by a sensor or calculated by the control unit 203. For example, the control unit 203 may determine a tilt angle of the second implement 107.

The method proceeds to step S111 and the control unit 203 controls the actuator 210 to provide a second force feedback for the upper wheel 220 in response to the manually contacted upper wheel 220 (detected at step S101). As explained above, the second force feedback may (e. g. reciprocally or proportionally) correlate with a parameter of the movement of the upper wheel 220 determined at step S108 and/or with a parameter of the rear hitch 105 or second implement 107 determined at step S110. For example, the strength of the second force feedback may be increased the closer the second implement 107 approaches the ground. The control unit 203 may also control the actuator 210 to provide a second force feedback with different patterns such as ripples. The second force feedback may be provided by the actuator 210 as a torque to the upper wheel 220 by means of the common shaft 214.

Hence, a single actuator 210 is provided to generate a force feedback for the two different wheels 216 and 220 of the input device 201. The control unit 203 may control the common actuator 210 to provide a first force feedback for the lower wheel 216 and a second force feedback for the upper wheel 220 whereas the first force feedback may be different to the second force feedback. The first force feedback is provided selectively to the manually contacted wheel out of the lower wheel 216 and the upper wheel 220.

After step S111, the method proceeds to step S112.

At step S112, the method ends. The method may be restarted again with step S100.

All references cited herein are incorporated herein in their entireties. If there is a conflict between definitions herein and in an incorporated reference, the definition herein shall control.

**LISTING OF DRAWING ELEMENTS**

| | | | |
|---|---|---|---|
| 101 | agricultural machine | 105 | rear hitch |
| 102 | vehicle | 106 | implement |
| 103 | cabin | 107 | implement |
| 104 | front hitch | 201 | input device |
| 202 | housing | 316 | sensor |
| 203 | control unit | | |
| 204 | I/O interface | | |
| 206 | controller | | |
| 208 | memory | | |
| 210 | actuator | | |
| 212 | axis | | |
| 214 | shaft | | |
| 216 | lower wheel | | |
| 217 | sensor | | |
| 218 | catching mechanism | | |
| 220 | upper wheel | | |
| 221 | sensor | | |
| 222 | catching mechanism | | |
| 223 | encoder | | |
| 301 | catching mechanism | | |
| 302 | protrusion | | |
| 304 | biasing element | | |
| 306 | contact surface | | |
| 308 | wheel | | |
| 310 | recess | | |
| 312 | angular range | | |
| 314 | angle sensor | | |

## Claims

1. An input device (201) for controlling an agricultural machine (101), comprising:
a lower wheel (216);
an upper wheel (220); wherein
the lower wheel (216) and the upper wheel (220) are coupled with a common actuator (210) for providing a force feedback to the lower wheel (216) and the upper wheel (220).

2. The input device (201) of claim 1, wherein
the lower wheel (216), the upper wheel (220) and the actuator (210) are coupled with each other by a common shaft (214).

3. The input device (201) of claim 2, wherein
the lower wheel (216) and/or the upper wheel (220) are uncoupleable from the common shaft (214).

4. The input device (201) of any one of the preceding claims, wherein
a rotational movement of the lower wheel (216) and a rotational movement of the upper wheel (220) are detectable by a common sensor (223).

5. The input device (201) of any one of the preceding claims, comprising
a control unit (203) configured to control the actuator (210) to provide
a first force feedback to the lower wheel (216); and
a second force feedback different to the first force feedback to the upper wheel (220).

6. The input device (201) of claim 5, wherein
the control unit (203) is configured to control the actuator (210) to provide selectively the first or the second force feedback.

7. The input device (201) of claim 5 or 6, wherein,
the first force feedback and the second force feedback depend on a torque provided by the actuator (210).

8. The input device (201) of any one of claims 5 to 7, wherein
the control unit (203) is configured to control the actuator (210) to
provide the first force feedback if the lower wheel (216) is manually contacted; and
provide the second force feedback if the upper wheel (220) is manually contacted.

9. The input device (201) of any one of claims 5 to 7, wherein
the control unit (203) is configured to control the actuator (210) to
provide the first force feedback if both the lower wheel (216) and the upper wheel (220) are manually contacted; and
provide the second force feedback if the upper wheel (220) only is manually contacted.

10. The input device (201) of any one of the preceding claims, wherein
the lower wheel (216) comprises a sensor (217) for detecting a manual contact; and
the upper wheel (220) comprises another sensor (221) for detecting a manual contact.

11. The input device (201) of claim 2 or any dependent claim thereon, comprising
a catching mechanism (218, 222, 301) for providing a relative movement between the common shaft (214) and the lower or the upper wheel (216, 220) within a predefined angular range (312).

12. The input device (201) of claim 11, wherein
the catching mechanism (218, 222, 301) comprises a sensor (314, 316) for determining the relative movement between the common shaft (214) and the lower or the upper wheel (216, 220).

13. The input device (201) of claim 11 or 12, wherein
the catching mechanism (218, 222, 301) comprises a biasing element (304) for urging the lower or the upper wheel (216, 220) into a neutral position.

14. An agricultural machine (101) comprising
an input device (201) of any one of the preceding claims;
a front hitch (104); and
a rear hitch (105); wherein
the control unit (203) is configured to
control the front hitch (104) in response to a rotational movement of one of the lower and upper wheels (216, 220); and
control the rear hitch (105) in response to a rotational movement of the other one of the lower and upper wheels (216, 220).

15. The agricultural machine (101) of claim 14; wherein
both the front hitch (104) and the rear hitch (105) are adjustable in height; and
the force feedback of one of the lower and upper wheels (216, 220) depends on the height of the front hitch (104); and
the force feedback of the other one of the lower and upper wheels (216, 220) depends on the height of the rear hitch (105).

16. A method of controlling a force feedback for an input device (201) having an actuator (210) coupled to a lower wheel (216) and an upper wheel (220), the method comprising:
Detecting a manual contact of the lower wheel (216) or the upper wheel (220); and
controlling the actuator (210) to provide
a first force feedback if the lower wheel (216) is manually contacted; and
a second force feedback if the upper wheel (220) is manually contacted.
